**Europäisches Patentamt**

**European Patent Office**

**Office européen des brevets**

(19)

(11) Veröffentlichungsnummer: **0 160 639**
**B1**

(12) **EUROPÄISCHE PATENTSCHRIFT**

(45) Veröffentlichungstag der Patentschrift:
**22.04.87**

(51) Int. Cl.⁴: **B 62 D 5/06**

(21) Anmeldenummer: **83902991.5**

(22) Anmeldetag: **28.09.83**

(86) Internationale Anmeldenummer:
**PCT/EP 83/00250**

(87) Internationale Veröffentlichungsnummer:
**WO 84/02500 (05.07.84 Gazette 84/16)**

(54) **SERVOLENKUNG, INSBESONDERE FÜR KRAFTFAHRZEUGE.**

(30) Priorität: **28.12.82 DE 3248252**

(43) Veröffentlichungstag der Anmeldung:
**13.11.85 Patentblatt 85/46**

(45) Bekanntmachung des Hinweises auf die Patenterteilung:
**22.04.87 Patentblatt 87/17**

(84) Benannte Vertragsstaaten:
**FR GB SE**

(56) Entgegenhaltungen:
**EP - A - 0 062 360**
**DE - A - 2 916 575**
**DE - U - 8 029 580**
**FR - A - 2 095 700**
**GB - A - 2 099 770**
**US - A - 4 119 172**
**US - A - 4 274 504**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **LANG, Armin, Rheinstr. 10, D-7070 Schwäbisch Gmünd (DE)**

(74) Vertreter: **Raue, Reimund, Zahnradfabrik Friedrichshafen AG Löwentaler Strasse 100 Postfach 2520, D-7990 Friedrichshafen 1 (DE)**

## Beschreibung

Die Erfindung betrifft eine Servolenkung, insbesondere für Kraftfahrzeuge, nach dem Oberbegriff des Anspruches 1.

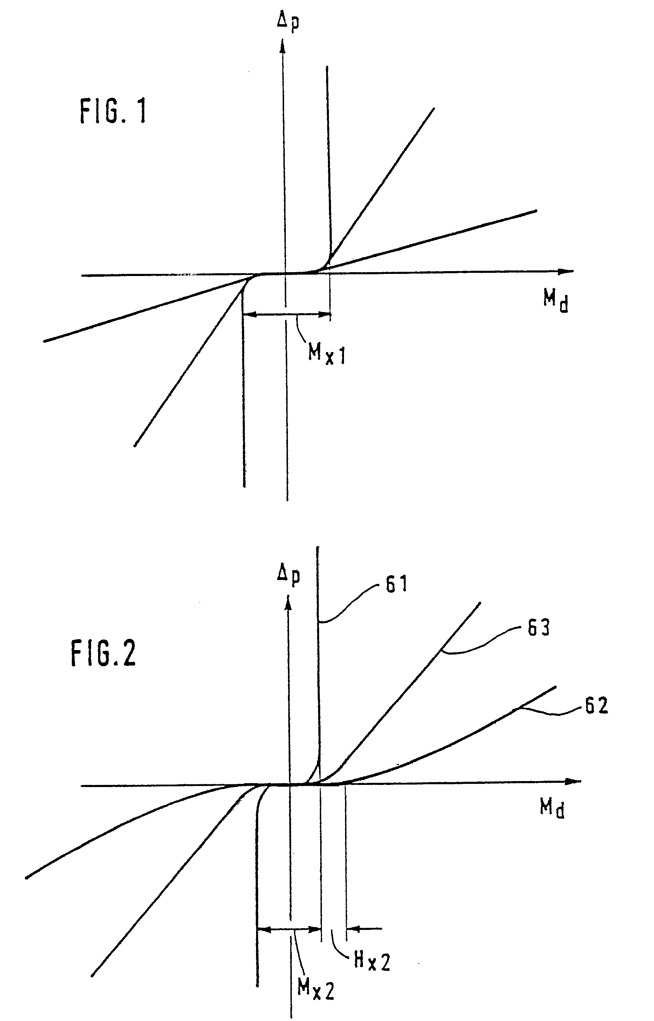

Eine derartige Servolenkung ist aus der DE-OS 31 22 370 bekannt. In dieser Servolenkung ist die hydraulische Rückwirkung während des Betriebes veränderbar, beispielsweise über den Fahrzeugtachometer in Abhängigkeit von der Fahrgeschwindigkeit. Dadurch ergibt sich eine Charakteristik des Steuerventils, wie sie in Fig. 1 dargestellt ist:

Beim Parkieren arbeitet das Steuerventil ohne hydraulische Rückwirkung, d.h. als Betätigungsmoment am Lenkhandrad muss nur die mechanische Mittenzentrierung $M_{x1}$ des Steuerventils überwunden werden. Danach setzt die volle hydraulische Unterstützung zur Bewegung der gelenkten Fahrzeugräder (steile Kurve) ein. Beginnt das Fahrzeug zu rollen, so muss zur mechanischen Mittenzentrierung ein zusätzliches, von der hydraulischen Rückwirkungseinrichtung erzeugtes druckabhängiges Betätigungsmoment überwunden werden, das mit zunehmender Fahrgeschwindigkeit ansteigt (flachere Kurven). Dabei erhält man durch die kleinen Parkierkräfte wohl einen guten Parkierkomfort und durch die Rückmeldung der Kräfte an den gelenkten Fahrzeugrädern auf das Lenkhandrad bei schneller Fahrt auch in diesem Bereich gute Eigenschaften. Die Parkierkräfte können jedoch nie kleiner sein als die mechanischen Zentrierkräfte. Bei Lenkkorrekturen im Geradeausfahrbereich treten aber an den gelenkten Fahrzeugrädern so kleine Reaktionskräfte auf, dass aus Gründen der Fahrsicherheit (bei hohen Geschwindigkeiten) diese Kräfte voll auf das Lenkhandrad übertragen werden sollten. Dies ist wiederum nur mit einer entsprechend hohen, mechanischen Mittenzentrierung möglich, weil dann die hydraulische Unterstützung mit der damit verbundenen Reduzierung der Betätigungsmomente ausbleibt.

Die Forderung nach niedrigen Zentrierkräften im Parkierbereich widerspricht dem Wunsch nach einer Reduzierung der Servounterstützung durch eine starke mechanische Mittenzentrierung bei schneller Geradeausfahrt. Die Auslegung der mechanischen Mittenzentrierung kann deshalb immer nur ein Kompromiss sein zwischen den beiden Forderungen.

Der Erfindung liegt deshalb die Aufgabe zugrunde, die bekannte Servolenkung derart zu verbessern, dass nicht nur die hydraulische Rückwirkung, sondern auch das Einsetzen der Servounterstützung steuerbar ist.

Diese Aufgabe wird durch die im Anspruch 1 angegebenen Merkmale gelöst. Zweckmässige und vorteilhafte Ausgestaltungen sind in den Unteransprüchen angegeben. Die in den Zeichnungen dargestellten Einzelheiten sind Gegenstand der Erfindung.

Durch die Ausbildung des Steuerventils mit den Drosselstellen ist es möglich, in der Servolenkung eine mechanische Zentriereinrichtung mit niedrigen Zentrierkräften vorzusehen, so dass die Parkierkräfte niedrig gehalten sein können. Durch eine vor dem Einsetzen der Servounterstützung bei höheren Fahrgeschwindigkeiten einsetzende hydraulische Rückwirkung wird ein auf das Steuerventil und damit auf das Lenkhandrad wirkendes hydraulisches Gegendrehmoment erzeugt, das den Charakter einer mechanischen Mittenzentrierung aufweist. Der schwächer ausführbaren mechanischen Mittenzentrierung wird also eine vom Rückwirkungssignal abgeleitete hydraulische Mittenzentrierung überlagert (siehe Fig. 2).

Im folgenden wird die Erfindung anhand mehrerer in einer Zeichnung dargestellter Ausführungsbeispiele näher erläutert. Es zeigt

Fig. 1 die Kennlinie eines Steuerventils nach dem Stand der Technik,

Fig. 2 die Kennlinie des erfindungsgemässen Steuerventils,

Fig. 3 Querschnitte durch verschiedene Aus-
bis      führungsbeispiele des Steuerventils mit
Fig. 7 den schematisch dargestellten weiteren Komponenten der Servolenkung.

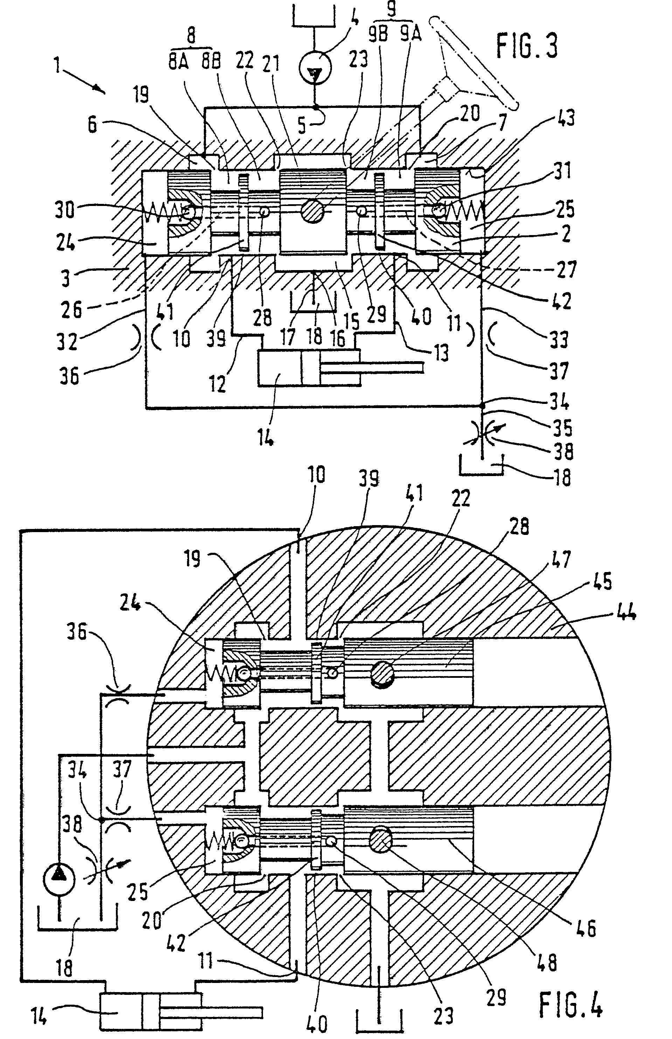

Die Servolenkung enthält ein in einem nicht dargestellten Lenkgetriebe angeordnetes Steuerventil 1 mit einem Ventilkolben 2, der in einem Ventilgehäuse 3 über ein Lenkhandrad zwangsläufig verschiebbar ist (Fig. 3). Das Druckmittel wird dem Steuerventil 1 von einer Servopumpe 4 über einen Zulaufanschluss 5 in zwei Gehäuseringnuten 6 und 7 zugeführt. Zwei Kolbennuten 8 und 9 des Ventilkolbens 2 stehen über Anschlüsse 10 bzw. 11 und zwei Leitungen 12 bzw. 13 in Verbindung mit den beiden Arbeitsräumen eines Servomotors 14. Eine zentrale Gehäuseringnut 15 steht über einen Rücklaufanschluss 16 und eine Rücklaufleitung 17 in Verbindung mit einem Behälter 18.

Durch Steuerkantenpaare, die zwischen den Gehäuseringnuten 6 bzw. 7 und den Kolbennuten 8 bzw. 9 angeordnet sind, werden zwei Zulaufsteueröffnungen 19 und 20 gebildet. An den Enden der zentralen Gehäuseringnut 15 und eines zentralen Kolbenbundes 21 bestehen weitere Steuerkantenpaare, die zwei Rücklaufsteueröffnungen 22 und 23 bilden.

An den Enden des Ventilkolbens 2 sind Rückwirkungsräume 24 und 25 angeordnet. Die Rückwirkungsräume 24 und 25 sind über Rückwirkungsleitungen 26 bzw. 27 mit Anschlussstellen 28 bzw. 29 verbunden, die jeweils zwischen den Zulaufsteueröffnungen 19 bzw. 20 und den Rücklaufsteueröffnungen 22 bzw. 23 liegen. In den Rückwirkungsleitungen 26 und 27 sind Rückschlagventile 30 bzw. 31 angeordnet, die in Richtung auf die Rückwirkungsräume 24 bzw. 25 aufsteuerbar sind.

Von den Rückwirkungsräumen 24 und 25 gehen Rückwirkungssteuerleitungen 32 bzw. 33 aus, die sich in einem Knotenpunkt 34 zu einer gemeinsamen Leitung 35 vereinigen. In den Rückwirkungssteuerleitungen 32 und 33 sind zwischen den Rückwirkungsräumen 24 und 25 und dem Knotenpunkt 34 feste Drosselstellen 36 bzw. 37 angeordnet. Die Leitung 35 führt über ein Steuerorgan 38 in den Behälter 18.

Das Steuerorgan 38 ist beispielsweise als Düse-Prallplatte-System gemäss US-PS 36 90 400 oder als elektro-hydraulischer Wandler gemäss DE-GM 80 29 580 ausgeführt. Wesentlich ist, dass mit dem Steuerorgan 38 in die Leitung 35 eine Drosselstelle zwischen den Rückwirkungsräumen 24 bzw. 25 und dem Behälter 18 eingeschaltet ist, die einen veränderbaren Drosselquerschnitt besitzt. Der Drosselquerschnitt wird in Abhängigkeit von der Fahrzeuggeschwindigkeit eingestellt. Statt der Verbindung des Steuerorgans 38 mit dem Behälter 18 ist auch eine Verbindung des Steuerorgans 38 mit dem Zulauf von der Servopumpe 4 möglich. Diese Ausführungsform ist für die Konstruktion und Dimensionierung der Abschlussdeckel der Rückwirkungsräume 24 und 25 vorteilhaft. Sie ist jedoch für die Erfindung nicht wesentlich und wird deshalb nicht näher beschrieben.

Zwischen den Anschlüssen 10 und 11 für die beiden Seiten des Servomotors 14 einerseits und den Anschlussstellen 28 und 29 für die Rückwirkungsleitungen 26 bzw. 27 der Rückwirkungsräume 24 bzw. 25 ist jeweils eine Drosselstelle 39 bzw. 40 angeordnet. Die Drosselstellen 39 und 40 werden gebildet zwischen je einem Drosselbund 41 bzw. 42 und einer Gehäusebohrung 43, in der der Ventilkolben 2 verschiebbar angeordnet ist. Durch die Drosselbunde 41 und 42 werden die beiden Kolbennuten 8 und 9 jeweils in zwei Teilnuten 8A, 8B bzw. 9A, 9B unterteilt.

Die Steuerkantenpaare der Zulaufsteueröffnungen 19 und 20 und die Steuerkantenpaare der Rücklaufsteueröffnungen 22 und 23 haben in Neutralstellung des Steuerventils Unterdeckung, d.h. sowohl die Zulaufsteueröffnungen 19 und 20 als auch die Rücklaufsteueröffnungen 22 und 23 sind in der Neutralstellung des Steuerventils 1 offen. Dabei ist die Unterdeckung der Steuerkantenpaare der Zulaufsteueröffnungen 19 und 20 grösser als die Unterdeckung der Steuerkantenpaare der Rücklaufsteueröffnungen 22 und 23.

Fig. 4 zeigt ein Ausführungsbeispiel, bei dem das Steuerventil als Drehkolbenventil mit zwei in einem drehbaren Ventilgehäuse 44 angeordneten Ventilkolben 45 und 46 ausgebildet ist, die durch zwei Zapfen 47 und 48 eines nicht dargestellten gabelförmigen Endes einer Lenkspindel zwangsläufig verschiebbar sind. Im übrigen entspricht dieses Ausführungsbeispiel dem Ausführungsbeispiel der Fig. 3. Die symmetrisch angeordneten Funktionen des einen Ventilkolbens 2 sind dabei zur Hälfte je auf eine Seite der Ventilkolben 45 und 46 aufgeteilt. Jeder Ventilkolben 45 und 46 weist also an einer seiner Stirnseiten einen Rückwirkungsraum 24 bzw. 25 auf. Die Zulaufsteueröffnung 19, der Anschluss 10 für den Servomotor 14, die Anschlussstelle 28 für den Rückwirkungsraum 24 und die Rücklaufsteueröffnung 22 liegen auf einer Seite des Ventilkolbens 45. Dazwischen liegt der Drosselbund 41 mit der Drosselstelle 39. Entsprechendes gilt für den Ventilkolben 46 mit der Zulaufsteueröffnung 20, dem Anschluss 11 für den Servomotor 14, die Anschlussstelle 29 für den Rückwirkungsraum 25 und die Rücklaufsteueröffnung 23 mit dem dazwischenliegenden Drosselbund 42 und der Drosselstelle 40. Ebenso sind die festen Drosselstellen 36 und 37 und das Steuerorgan 38 der geschwindigkeitsabhängigen Rückwirkungssteuereinrichtung entsprechend wie in Fig. 3 angeordnet.

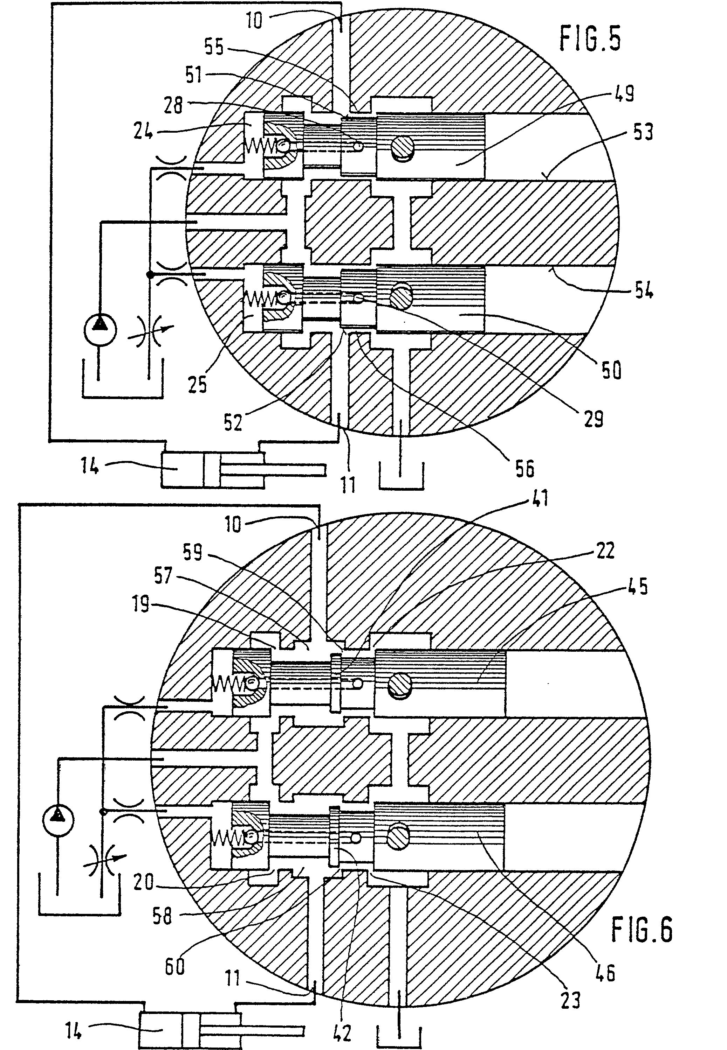

Bei dem Ausführungsbeispiel der Fig. 5 sind die Drosselbunde 41 und 42 ersetzt durch an den Ventilkolben 49 und 50 angeordnete Stufen 51 und 52. Diese Stufen 51 und 52 bilden zusammen mit den Gehäusebohrungen 53 und 54 Drosselspalte 55 und 56. Durch diese Anordnung ist eine kürzere Ausführung der Ventilkolben möglich, da die Anschlussstellen 28 und 29 für die Rückwirkungsräume 24 und 25 in axialer Richtung der Ventilkolben 49 und 50 wenigstens teilweise auf gleicher Ebene liegen, wie die Anschlüsse 10 und 11 für den Servomotor 14. Dies ist dann möglich, wenn die Anschlussstellen 28 und 29 und die Anschlüsse 10 und 11 zueinander verdreht sind, beispielsweise um 90°, wie dies in Fig. 5 dargestellt ist.

In einem weiteren Ausführungsbeispiel (Fig. 6) wirken die Drosselbunde 41 und 42 nur dann, wenn die Ventilkolben 45 und 46 geringfügig aus ihrer Neutralstellung verschoben sind. An den Anschlüssen 10 und 11 für den Servomotor 14 sind weitere Gehäuseringnuten 57 und 58 angeordnet. Jeweils eine an einem Ende der Gehäuseringnuten 57 und 58 ausgebildete Steuerkante bildet zusammen mit einer Steuerkante der Drosselbunde 41 und 42 eine in Neutralstellung des Steuerventils offene Rückwirkungssteueröffnung 59 bzw. 60. Die Steuerkanten der Steueröffnungen sind dabei derart aufeinander abgestimmt, dass bei einer Auslenkung der Ventilkolben 45 und 46 im Sinne einer Rechts- bzw. Linksdrehung zunächst die Rückwirkungssteueröffnungen 59 bzw. 60, dann die Rücklaufsteueröffnungen 23 bzw. 22 und danach erst die Zulaufsteueröffnungen 19 bzw. 20 schliessen.

*Funktion*

In der Neutralstellung des Steuerventils (Fig. 3 und 4) teilt sich der Druckmittelstrom von der Servopumpe 4 in zwei etwa gleich grosse Ströme, die über die Zulaufsteueröffnungen 19 und 20 und danach über die Rücklaufsteueröffnungen 22 und 23 zum Behälter 18 strömen. Bei einer derart gleichmässigen Stromaufteilung auf die linke und rechte Hälfte des Ventilkolbens 2 bzw. auf die beiden Ventilkolben 45 und 46 entstehen an den Drosselstellen 39 und 40 gleiche Druckgefälle. Sowohl die beiden Seiten des Servomotors 14 als auch die Rückwirkungsräume 24 und 25 sind druckausgeglichen.

Wird das Steuerventil beispielsweise im Sinne einer Rechtsdrehung verstellt, so verschiebt sich in Fig. 3 der Ventilkolben 2 nach rechts bzw. in Fig. 4 der obere Ventilkolben 45 nach rechts und der untere Ventilkolben 46 nach links. Wegen der unterschiedlichen Unterdeckung an den Steuerkantenpaaren der Zulaufsteueröffnungen 19, 20 und der Rücklaufsteueröffnung 22, 23 werden an den Zulaufsteueröffnungen 19 und 20 die Druckverhältnisse bei geringfügiger Auslenkung praktisch nicht beeinflusst, während die Rücklaufsteueröffnungen 22 und 23 eine stärkere Reaktion hervorrufen. Das Ergebnis ist, dass der Teilstrom über die Zulaufsteueröffnung 19 und die Rücklaufsteueröffnung 22 zunimmt und der Teilstrom über die Zulaufsteueröffnung 20 und die Rücklaufsteueröffnung 23 entsprechend abnimmt. Damit steigt das Druckgefälle an der Drosselstelle 39, das Druckgefälle an der Drosselstelle 40 nimmt ab. Während sich also die Drücke in den Kolbennuten 8A und 9A nur unwesentlich ändern, ergibt sich eine spürbare Druckverschiebung in den Kolbennuten 8B und 9B und damit an den Anschlussstellen 28 und 29 für die Rückwirkungsräume 24 und 25.

Unter der Voraussetzung, dass das Steuerorgan 38 geschlossen ist, haben die Druckunterschiede an den Anschlussstellen 28 und 29 keinen Einfluss auf die Höhe der hydraulischen Rückwirkung, weil das Druckmittel von der Anschlussstelle 28 mit dem höheren Druck wegen des geschlossenen Rückschlagventils 31 nicht zu der Anschlussstelle 29 mit dem niedrigeren Druck abfliessen kann. Dadurch sind die Drosselstellen 36 und 37 stromlos und somit die Rückwirkungsräume 24 und 25 druckausgeglichen.

In diesem Betriebsbereich, d.h. bei geschlossenem Steuerorgan 38, ist nur die mechanische Mittenzentrierung wirksam. Das Steuerventil arbeitet völlig ohne hydraulische Rückwirkung, so dass das Betätigungsmoment am Lenkhandrad nicht über die Grösse der mechanischen Mittenzentrierung $M_{x2}$ des Steuerventils ansteigen kann, obwohl die volle hydraulische Unterstützung zur Bewegung der gelenkten Fahrzeugräder zur Verfügung steht. Dieser Betriebszustand ist in Fig. 2 durch die Kennlinie 61 dargestellt. (In den Diagrammen der Fig. 1 und 2 ist auf der Ordinate der Differenzdruck $\Delta_p$ am Servomotor und auf der Abszisse das Betätigunsmoment $M_d$ am Lenkhandrad aufgetragen.)

In einem Betriebszustand, der bei hohen Fahrgeschwindigkeiten vorliegt, ist das Steuerorgan 38 geöffnet. Dann kann sowohl über das Rückschlagventil 30 als auch über das Rückschlagventil 31 Druckmittel in die Rückwirkungsräume 24 und 25 strömen und über die Drosselstelle 36 bzw. 37 und danach über das geöffnete Steuerorgan 38 zum Behälter 18 abfliessen. In dem Fall, in dem das Steuerorgan 38 so weit geöffnet ist, dass an dem Knotenpunkt 34 der Leitungen 32 und 33 der Behälterdruck herrscht, ist eine gegenseitige Beeinflussung der Rückwirkungsräume 24 und 25 ausgeschlossen. Bei Vernachlässigung der Durchflusswiderstände der Rückschlagventile 30 und 31 herrscht in den Rückwirkungsräumen 24 und 25 der gleiche Druck wie an den Anschlussstellen 28 und 29. Da bei der Auslenkung des Steuerventils wegen der beschriebenen Strömungsmechanik der Druck an der Anschlussstelle 28 niedriger ist als an der Anschlussstelle 29, entsteht dadurch ein linksdrehendes, d.h. der Auslenkung des Steuerventils entgegenwirkendes hydraulisches Drehmoment. Da aufgrund der oben beschriebenen Steuerfolge der Steueröffnungen die Zulaufsteueröffnungen 19 und 20 noch geöffnet sind, bleibt der Servomotor wegen der Vernachlässigbarkeit der entstehenden Druckgefälle druckausgeglichen, also kräftefrei. Damit hat das beschriebene hydraulische Gegendrehmoment den Charakter einer mechanischen Mittenzentrierung.

Bei weiterer Auslenkung des Steuerventils wird die Rücklaufsteueröffnung 23 immer mehr geschlossen, so dass sich eine weitere Stromverlagerung zugunsten der linken Hälfte des Ventilkolbens 2 (Fig. 3) bzw. des oberen Ventilkolbens 45 (Fig. 4) ergibt. Dadurch vergrössert sich das Druckgefälle wegen des höheren Stromes an dem Drosselbund 41. Der Druckunterschied an den Entnahmestellen 28 und 29 wird grösser. Diese Strömungsmechanik setzt sich fort, bis die Zulaufsteueröffnung 19 durch ihre Verkleinerung eine Druckerhöhung bewirkt. Dann stellt sich am Servomotor 14 ein Differenzdruck ein und das Steuerventil arbeitet weiter in bekannter Weise.

In Fig. 2 ist eine Kennlinie 62 für den Betriebszustand bei hohen Fahrgeschwindigkeiten eingezeichnet. Aus dem im Vergleich zu der Kennlinie 61 längeren waagerechten Kennlinienstück wird die Grösse der summierten mechanischen und hydraulischen Zentrierkomponenten $M_{x2}$ und $H_{x2}$ deutlich.

Ist das Steuerorgan 38 teilweise geschlossen, so stellt sich an dem Knotenpunkt 34 ein Staudruck ein, der das Druckgefälle zwischen den Rückwirkungsräumen 24 und 25 vermindert. Dadurch vermindert sich auch die hydraulische Zentrierkomponente und die Höhe der hydraulischen Rückwirkung. In Fig. 2 ist dies durch die Kennlinie 63 dargestellt.

Die Funktion der Anordnung nach Fig. 5 stimmt weitgehend mit der Funktion nach Fig. 3 und 4 überein.

Die Funktion der Anordnung nach Fig. 6 unterscheidet sich von der Funktion der Anordnungen nach Fig. 3 bis 5 durch einen geringeren Durchlaufwiderstand in der Neutralstellung des Steuerventils, weil hier die Rückwirkungssteueröffnungen 59 und 60 geöffnet sind und so ein ungehinderter Durchlauf des Druckmittels von der Servopumpe 4 zum Behälter 18 möglich ist. Bei ausgelenktem Steuerventil haben die Anordnungen nach Fig. 6 und Fig. 3 und 4 die gleiche Funktion.

Für alle Ausführungsbeispiele nach den Fig. 3 bis 6 ist wesentlich, dass in dem Steuerventil Drosselstellen vorgesehen sind, die beim Auslenken des Steuerventils aus seiner Neutralstellung zunächst nur den Druck in den Rückwirkungsräumen erhöhen und dass erst bei weiterer Auslenkung des Steuerventils der Differenzdruck für den Servomotor gesteuert wird.

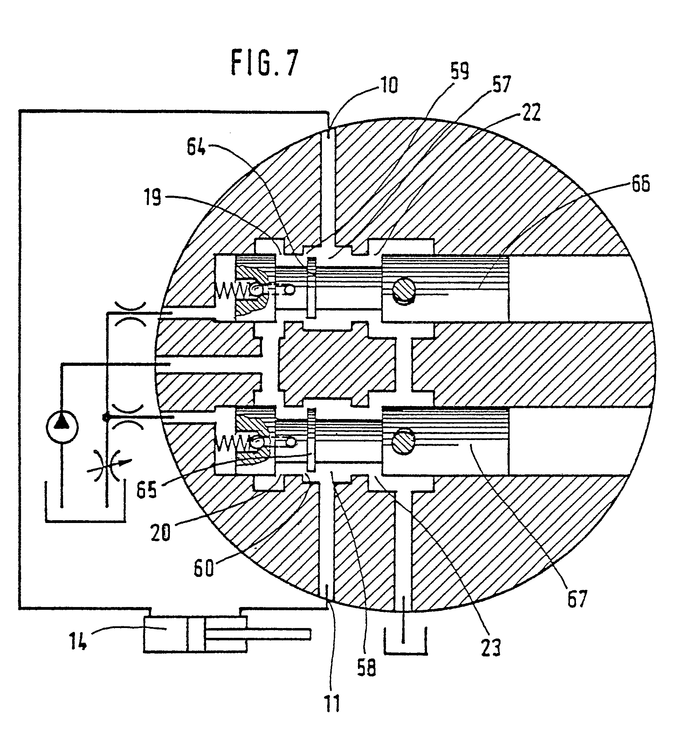

In Fig. 7 ist ein Ausführungsbeispiel dargestellt, bei dem die Lage der Drosselbunde gegenüber dem Ausführungsbeispiel der Fig. 6 geändert ist. Während bei den vorangegangenen Ausführungsbeispielen die Drosselstellen 39, 40 (Fig. 3, 4) bzw. 55, 56 (Fig. 5) bzw. die Drosselbunde 41, 42 (Fig. 6) zwischen den Anschlüssen 10, 11 für den Servomotor 14 und den Rücklaufsteueröffnungen 22, 23 liegen, sind die Drosselbunde 64, 65 der Ventilkolben 66, 67 in Fig. 7 zwischen den Zulaufsteueröffnungen 19, 20 und den Anschlüssen 10, 11 für den Servomotor 14 angeordnet. Diese Lage der Drosselstellen bzw. Drosselbunde lässt sich auch bei den Ausführungsbeispielen der Fig. 3 bis 5 anwenden.

Die Funktion des Ausführungsbeispieles nach Fig. 7 entspricht der Funktion der Beispiele nach Fig. 3 bis 6. Auch hier ändert sich bei geöffnetem Steuerorgan 38 bei einer kleinen Verschiebung zunächst nur die Differenz der Drücke in den Rückwirkungsräumen 24, 25, während sich die Druckdifferenz im Servomotor nur unwesentlich ändert. Zu beachten ist, dass die Steuerfolge der Steueröffnungen umgekehrt ist wie bei den Anordnungen nach Fig. 3 bis 6.

Bei allen Ausführungsbeispielen kann der gewünschte Kennlinienverlauf den jeweiligen Verhältnissen durch entsprechende Wahl der Drosselquerschnitte und der Steuerfolge der Steueröffnungen angepasst werden.

*Bezugszeichen*

| | |
|---|---|
| 1 | Steuerventil |
| 2 | Ventilkolben |
| 3 | Ventilgehäuse |
| 4 | Servopumpe |
| 5 | Zulaufanschluss |
| 6 | Gehäuseringnut |
| 7 | Gehäuseringnut |
| 8, 8A, 8B | Kolbennut |
| 9, 9A, 9B | Kolbennut |
| 10 | Anschluss für 14 |
| 11 | Anschluss für 14 |
| 12 | Leitung |
| 13 | Leitung |
| 14 | Servomotor |
| 15 | Zentrale Gehäuseringnut |
| 16 | Rücklaufanschluss |
| 17 | Rücklaufleitung |
| 18 | Behälter |
| 19 | Zulaufsteueröffnung |
| 20 | Zulaufsteueröffnung |
| 21 | Zentraler Kolbenbund |
| 22 | Rücklaufsteueröffnung |
| 23 | Rücklaufsteueröffnung |
| 24 | Rückwirkungsraum |
| 25 | Rückwirkungsraum |
| 26 | Rückwirkungsleitung |
| 27 | Rückwirkungsleitung |
| 28 | Anschlussstelle für 24, 26 |
| 29 | Anschlussstelle für 25, 27 |
| 30 | Rückschlagventil |
| 31 | Rückschlagventil |
| 32 | Rückwirkungssteuerleitung |
| 33 | Rückwirkungssteuerleitung |
| 34 | Knotenpunkt |
| 35 | Leitung |
| 36 | Feste Drosselstelle |
| 37 | Feste Drosselstelle |
| 38 | Steuerorgan |
| 39 | Drosselstelle |
| 40 | Drosselstelle |
| 41 | Drosselbund |
| 42 | Drosselbund |
| 43 | Gehäusebohrung |
| 44 | Ventilgehäuse |
| 45 | Ventilkolben |
| 46 | Ventilkolben |
| 47 | Zapfen |
| 48 | Zapfen |
| 49 | Ventilkolben |
| 50 | Ventilkolben |
| 51 | Stufe |
| 52 | Stufe |
| 53 | Gehäusebohrung |
| 54 | Gehäusebohrung |
| 55 | Drosselspalt |
| 56 | Drosselspalt |
| 57 | Gehäuseringnut |
| 58 | Gehäuseringnut |
| 59 | Rückwirkungssteueröffnung |
| 60 | Rückwirkungssteueröffnung |
| 61 | Kennlinie |
| 62 | Kennlinie |
| 63 | Kennlinie |
| 64 | Drosselbund |
| 65 | Drosselbund |
| 66 | Ventilkolben |
| 67 | Ventilkolben |

**Patentansprüche**

1. Servolenkung, insbesondere für Kraftfahrzeuge, mit einem Servomotor, einer Servopumpe, einem Behälter und einem Steuerventil mit einem zusätzlichen Anschluss für ein Steuerorgan mit in Abhängigkeit von der Fahrzeuggeschwindigkeit veränderbarem Drosselquerschnitt, wobei das Steuerventil wenigstens einen axial verschiebbaren Ventilkolben, einen Zulaufanschluss, je einen zwischen dem Zulaufanschluss und dem Rücklaufanschluss liegenden Anschluss für die beiden Seiten des Servomotors und mindestens zwei, je an eine Stirnseite der (des) Ventilkolben(s) angrenzende Rückwirkungsräume aufweist, die jeweils an zwischen einer durch ein Steuerkantenpaar gebildeten Zulaufsteueröffnung und einer durch ein Steuerkantenpaar gebildeten Rücklaufsteueröffnung liegenden Stellen des Steuerventils angeschlossen sind, wobei die Rückwirkungsräume durch feste Drosselstellen hydraulisch voneinander getrennt und über je eine der Drosselstellen mit dem gemeinsamen Steuerorgan verbunden sind und wobei zwischen den Rückwirkungsräumen einerseits und den diesen zugeordneten Arbeitsräumen des Servomotors andererseits in Richtung zum jeweiligen Rückwirkungsraum in ihre geöffnete Stellung steuerbare Rückschlagventile angeordnet sind, dadurch gekennzeichnet, dass zwischen den Anschlüssen (10, 11) für die beiden Seiten des Servomotors (14) und den Anschlussstellen (28, 29) für die Rückwirkungsräume (24, 25) jeweils eine Drosselstelle (39, 40; 55, 56) angeordnet ist und dass in der Neutralstellung des Ventilkolbens (2) die Steuerkanten der den Anschlüssen (10, 11) für den Servomotor (14) benachbarten Steuerkantenpaare der Zulauf- bzw. Rücklaufsteueröffnungen (19, 20; 22, 23) weiter voneinander entfernt sind als die Steuerkanten der den Anschlussstellen (28, 29) für die Rückwirkungsräume (24, 25) benachbarten Steuerkantenpaare der Rücklauf- bzw. Zulaufsteueröffnungen (22, 23; 19, 20).

2. Servolenkung nach Anspruch 1, dadurch gekennzeichnet, dass die Drosselstellen (39, 40) durch Drosselbunde (41, 42) gebildet sind.

3. Servolenkung nach Anspruch 1, dadurch gekennzeichnet, dass die Drosselstellen (55, 56) durch Stufen (51, 52) an den Ventilkolben (49, 50) gebildet sind.

4. Servolenkung nach Anspruch 2, dadurch gekennzeichnet, dass jeder Drosselbund (41, 42) eine Steuerkante aufweist, die zusammen mit je einer an dem Ventilgehäuse angeordneten Steuerkante eine in Neutralstellung des Steuerventils offene Rückwirkungssteueröffnung (59, 60) bildet.

5. Servolenkung nach Anspruch 4, dadurch gekennzeichnet, dass die Unterdeckung der Steuerkantenpaare der Rückwirkungssteueröffnungen (59, 60) kleiner ist als die Unterdeckung der Steuerkantenpaare der Zulaufsteueröffnungen (19, 20) und der Rücklaufsteueröffnungen (22, 23).

## Claims

1. Servosteering, especially for motor vehicles, with a servomotor, a servopump, a reservoir and a control valve with an additional connection for a control organ with a throttle cross section variable in dependence on the speed of travel, whereby the control valve has at least one axially shiftable valve spool, an inlet port, one port each for the two sides of the servomotor located between the inlet port and the return port, and at least two reaction chambers each adjacent to a front end of the valve spool(s), which are connected each to sections of the control valve located between an inlet control opening formed by a pair of control edges and a return control opening formed by a pair of control edges, whereby the reaction chambers are separated hydraulically from one another by fixed throttles and connected each with the common control organ by means of one of the throttles, and whereby between the reaction chambers on the one hand and the operating chambers of the servomotor assigned to the former on the other hand, check valves controlable in the direction toward the pertinent reaction chamber in their open position have been arranged, characterized in that one throttle each (39, 40; 55, 56) is provided between the ports (10, 11) for the two sides of the servomotor (14) and the connecting ports (28, 29) for the reaction chambers (24, 25), and in that neutral position of valve piston (2), the control edges of the pairs of control edges of the inlet or return control openings (19, 20; 22, 23) adjacent to the ports (10, 11) for servomotor (14) are farther apart than the control edges of the pairs of control edges of the return or inlet control openings (19, 20, 22, 23) adjacent to the connecting ports (28, 29) for the reaction chambers (24, 25).

2. Servosteering according to claim 1, characterized in that the throttles (39, 40) are formed by throttle collars (41, 42).

3. Servosteering according to claim 1, characterized in that the throttles (55, 56) are formed by steps (51, 52) on the valve spools (49, 50).

4. Servosteering according to claim 2, characterized in that each throttle collar (41, 42) has a control edge which, together with one control edge each provided on the valve housing, forms a reaction control opening (59, 60) open in the neutral position of the control valve.

5. Servosteering according to claim 4, characterized in that the gap of the pair of control edges of the reaction control openings (59, 60) is smaller that the gap of the pair of control edges of the inlet control openings (19, 20) and of the return control openings (22, 23).

## Revendications

1. Direction assistée, notamment pour véhicules utilitaires, comportant un servomoteur, une servopompe, un réservoir et une soupape de commande pourvue d'un raccordement complémentaire pour un organe de commande avec une section d'étranglement variable en fonction de la vitesse du véhicule, dans laquelle la soupape de commande comporte au moins un piston de soupape coulissant axialement, un raccord d'entrée, un raccord respectif situé entre le raccord d'entrée et le raccord de sortie, pour la liaison avec chacun des deux côtés du servomoteur, et au moins deux chambres à effet rétroactif adjacentes à une extrémité respective du ou des piston(s) de soupape, ces chambres étant reliées à deux zones respectives de la soupape de commande situées entre une ouverture de commande d'entrée, définie par une paire d'arêtes de commande, et une ouverture de commande de sortie définie par une paire d'arêtes de commande, et dans laquelle les chambres à effet rétroactif sont séparées hydrauliquement l'une de l'autre par des étranglements fixes et sont reliées à l'organe de commande commun chacune via l'un de ces étranglements, et dans laquelle des soupapes de retenue, pouvant s'ouvrir en direction des chambres à effet rétroactif correspondantes, sont montées entre lesdites chambres à effet rétroactif et les chambres de travail correspondantes du servomoteur, caractérisée en ce qu'un étranglement respectif (39, 40; 55, 56) est disposé entre lesdits raccords (10, 11) de liaison avec les deux côtés du servomoteur (14) et lesdites zones (28, 29) reliées aux chambres à effet rétroactif (24, 25), et en ce que, dans la position neutre du piston de soupape (2), parmi les paires d'arêtes de commande définissant lesdites ouvertures de commande d'entrée et de sortie (19, 20; 22, 23), celles qui sont voisines des raccords (10, 11) de liaison au servomoteur (14) ont leurs arêtes plus espacées l'une de l'autre que celles qui sont voisines des zones (28, 29) reliées aux chambres à effet rétroactif (24, 25).

2. Direction assistée selon la revendication 1, caractérisée en ce que les étranglements (39, 40) sont formés par des collerettes (41, 42).

3. Direction assistée selon la revendication 1, caractérisée en ce que les étranglements (55, 56) sont formés par des redans (51, 52) ménagés sur les pistons de soupape (49, 50).

4. Direction assistée selon la revendication 2, caractérisée en ce que chacune desdites collerettes (41, 42) comporte une arête de commande qui, avec une arête de commande respective ménagée sur le corps de la soupape, définit une ouverture (59, 60) de commande d'effet rétroactif, cette ouverture étant ouverte dans la position neutre de la soupape.

5. Direction assistée selon la revendication 4, caractérisée en ce que l'espacement entre les paires d'arêtes de commande définissant les ouvertures de commande d'effet rétroactif (59, 60) est plus petit que l'espacement entre les paires d'arêtes de commande définissant les ouvertures de commande d'entrée (19, 20) et les ouvertures de commande de sortie (22, 23).

FIG. 1

$\Delta p$

$M_d$

$M_{x1}$

FIG.2

$\Delta p$

61

63

62

$M_d$

$H_{x2}$

$M_{x2}$

9

0 160 639

FIG.3

FIG.4

0 160 639

FIG.5

FIG.6

# FIG.7